(19) Europäisches Patentamt
European Patent Office
Office européen des brevets

(11) **EP 2 367 274 A2**

(12) **EUROPEAN PATENT APPLICATION**

(43) Date of publication:
**21.09.2011 Bulletin 2011/38**

(51) Int Cl.:
**H02M 3/156** $^{(2006.01)}$

(21) Application number: **11158493.4**

(22) Date of filing: **16.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.03.2010 CN 201010124806**

(71) Applicant: **Monolithic Power Systems, Inc.
San Jose, CA 95120-5000 (US)**

(72) Inventors:
• **Li, En**
**Hangzhou Zhejiang 310012 (CN)**
• **Zhang, Junming**
**Hangzhou Zhejiang 310012 (CN)**
• **Ren, Yuancheng**
**Hangzhou Zhejiang 310012 (CN)**

(74) Representative: **Leach, James et al
Mewburn Ellis LLP
33 Gutter Lane
London EC2V 8AS (GB)**

(54) **Switching mode power supply with primary side control and the method thereof**

(57)    A switching mode power supply with primary side control is disclosed. A signal containing input voltage information and a signal containing both input voltage information and output voltage information are provided to a subtracter to generate a feedback signal indicative of the output voltage. The feedback signal is then used to control the switching mode power supply to operate at desired mode.

FIG. 2

**Description**

This application claims priority to and the benefit of Chinese Patent Application No. 201010124806.3, filed March 16th, 2010, which is incorporated herein by reference in its entirety.

The present invention relates generally to electrical circuits, and more particularly but not exclusively to switching mode power supplies.

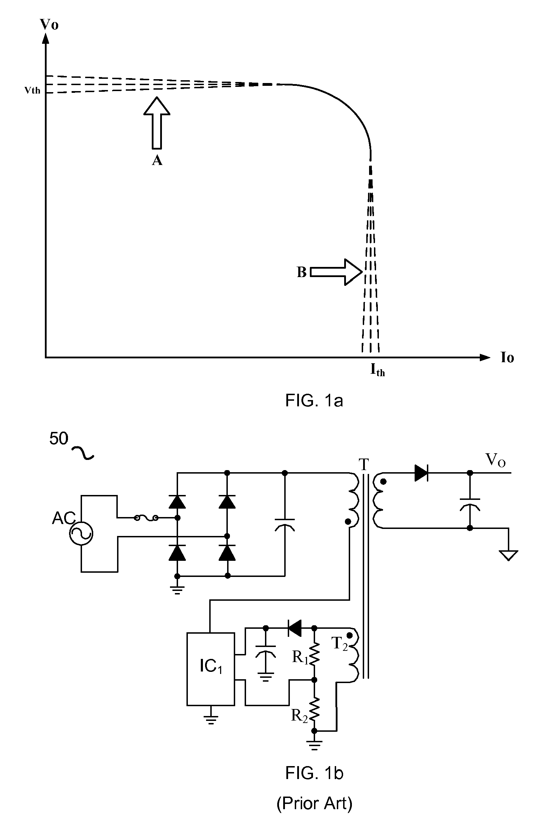

Switching mode power supplies can be used in adapters and chargers where safety and efficiency is demanded. They generally comprise primary circuits and secondary circuits which are isolated by a transformer. As can be seen from FIG. 1a, the operation of a switching mode power supply used in adapters and chargers may be divided into 2 periods: the first one is a constant current control period (see section B) and the second one is a constant voltage control period (see section A). In section B, at the beginning of a typical full-charge cycle, a constant output current $I_{th}$ is applied when the output voltage is low or rises to the threshold voltage $V_{th}$. In section A, the output voltage reaches the threshold voltage $V_{th}$, and the switching mode power supply switches to the constant voltage mode and continues in that mode until the charging current declines to nearly zero. In order to keep the output current constant, a secondary current sensing circuitry may be applied to provide a feedback signal to a control circuit by an opto-coupler. However, such structure can be complicated. In addition, it can suffer from unwanted energy losses and low efficiency. In order to eliminate the opto-coupler and the secondary current sensing circuit, a primary side control method is widely used. FIG. 1b shows such a traditional primary control circuitry. However, the switching mode power supply in FIG. 1b needs an auxiliary winding for the feedback purpose, which increases the cost.

Preferably, the present disclosure provides a primary side control circuit without auxiliary winding.

Preferably, It is an object of the present invention to provide a primary side control switching mode power supply without auxiliary winding.

In accomplishing the above and/or other preferred objects, there may be provided, in accordance with an embodiment of the present invention, a switching mode power supply, comprising: a transformer having a primary winding and a secondary winding, wherein the primary winding has a first terminal and a second terminal, wherein the first terminal is configured to receive an input voltage, and the secondary winding is configured to supply power to a load; a main switch coupled to the second terminal of the primary winding to control a current flowing through the primary winding; a feedback circuit coupled to the primary winding to receive a voltage across the primary winding, and based on the voltage across the primary winding, the feedback circuit generates a feedback signal; and a control circuit having a first input terminal, a second input terminal, a third input terminal, and an output terminal, wherein the first input terminal is coupled to the feedback circuit to receive the feedback signal, the second input terminal is coupled to the main switch to receive the current flowing through the primary winding, and the third input terminal is coupled to a peak current reference signal, and wherein based on the feedback signal, the current flowing through the primary winding, and the peak current reference signal, the control circuit generates a switching signal to toggle the main switch.

Furthermore, there may be provided, in accordance with an embodiment of the present invention, a method used in a switching mode power supply comprising: coupling an input voltage to a first terminal of a primary winding of a transformer; coupling a main switch to a second terminal of the primary winding to control a current flowing through the primary winding and to control an output voltage provided to a load at a secondary winding of the transformer; sensing a voltage across the primary winding to generate a feedback signal indicative of the output voltage; and generating a switching signal in response to: (1) the current flowing through the primary winding, (2) the feedback signal, and (3) a current reference signal; wherein the main switch is controlled by the switching signal.

These and other preferred features of the present invention will be readily apparent to persons of ordinary skill in the art upon reading the entirety of this disclosure, which includes the accompanying drawings and claims.

BRIEF DESCRIPTION OF THE DRAWINGS

FIG. 1a schematically shows the operation period of a switching mode power supply applied in adapters and chargers.

FIG. 1b schematically shows a prior art primary side control switching mode power supply.

FIG. 2 schematically shows a switching mode power supply 100 with primary side control in accordance with an embodiment of the present invention.

FIG. 3 schematically shows a switching mode power supply 200 with primary side control in accordance with an embodiment of the present invention.

FIG. 4a schematically shows a circuit 210 represented by the integrated control circuit $IC_1$ of the switching mode power supply 200 of FIG. 3 in accordance with an embodiment of the present invention.

FIG. 4b shows a schematic circuit 220 represented by the integrated control circuit $IC_1$ in accordance with an embodiment of the present invention.

FIG. 4c shows a schematic circuit 230 represented by the integrated control circuit $IC_1$ in accordance with an embodiment of the present invention.

FIG. 4d shows a schematic circuit 240 represented by the integrated control circuit $IC_1$ in accordance with an embodiment of the present invention.

FIG. 4e shows a schematic circuit 250 represented by the integrated control circuit $IC_1$ in accordance with an embodiment of the present invention.

FIG. 4f shows a schematic circuit 260 represented by the integrated control circuit $IC_1$ in accordance with an embodiment of the present invention.

FIG. 4g shows a schematic circuit 270 represented by the integrated control circuit $IC_1$ in accordance with an embodiment of the present invention.

FIG. 4h shows a schematic circuit 280 represented by the integrated control circuit $IC_1$ in accordance with an embodiment of the present invention.

FIG. 5 shows a schematic flowchart 300 of a method of controlling a switching mode power supply in accordance with en embodiment of the present invention.

The use of the same reference label in different drawings indicates the same of like components.

In the present disclosure, numerous specific details are provided, such as examples of circuits, components, and methods, to provide a thorough understanding of embodiments of the invention. Persons of ordinary skill in the art will recognize, however, that the invention can be practiced without one or more of the specific details. In other instances, well-known details are not shown or described to avoid obscuring aspects of the invention.

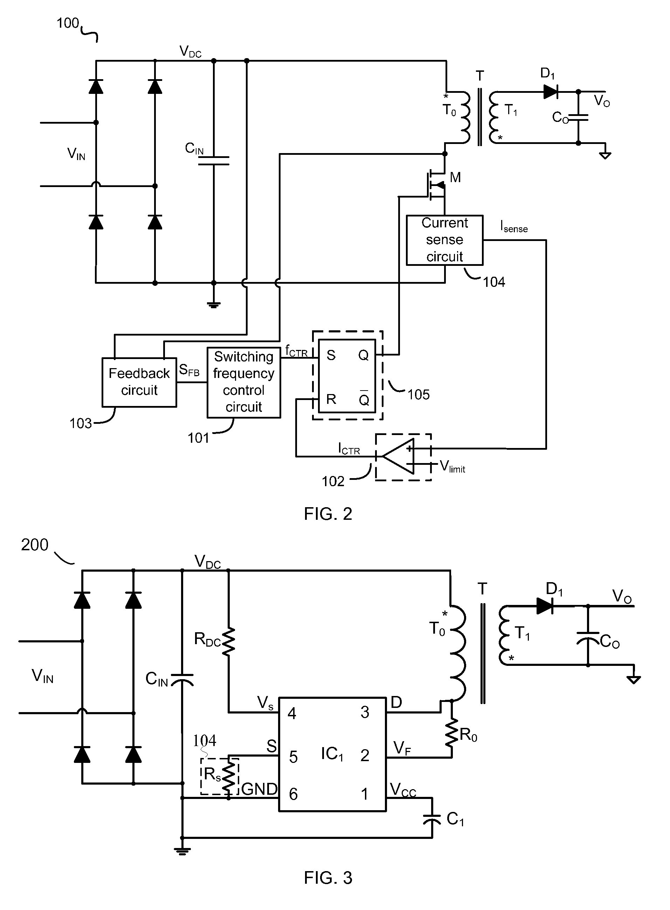

FIG. 2 schematically shows a switching mode power supply 100 with primary side control in accordance with an embodiment of the present invention. In the example of FIG. 2, the switching mode power supply 100 comprises: a rectifier bridge with a capacitor $C_{in}$ coupled across it; a transformer T having a primary winding To and a secondary winding $T_1$, wherein the primary winding To has a first terminal and a second terminal, wherein the first terminal is configured to receive an input voltage $V_{DC}$, and the secondary winding $T_1$ is configured to supply power to a load; a main switch M coupled to the second terminal of the primary winding $T_0$ to control a current flowing through the primary winding; a diode $D_1$; an output capacitor $C_o$; a feedback circuit 103 coupled to the primary winding to receive a voltage across the primary winding, and based on the voltage across the primary winding, the feedback circuit 103 generates a feedback signal; a current sense circuit 104 coupled to the main switch, wherein the current sense circuit 104 is configured to generate a current sensed signal by sensing the current flowing through the primary winding when the main switch is turned on; and a control circuit having a first input terminal, a second input terminal, a third input terminal, and an output terminal, wherein the first input terminal is coupled to the feedback circuit 103 to receive the feedback signal $S_{FB}$, the second input terminal is coupled to the main switch M to receive the current flowing through the primary winding To, and the third input terminal is coupled to a peak current reference signal $V_{limit}$, and wherein based on the feedback signal $S_{FB}$, the current flowing through the primary winding, and the peak current reference signal $V_{limit}$, the control circuit generates a switching signal to toggle the main switch M. The current sense circuit 104 may comprise a resistance sampling circuit, a transformer sampling circuit, or a current amplifier sampling circuit which is known to persons of ordinary skill in the art.

In an embodiment of the present invention, the control circuit comprises: a switching frequency control circuit 101 coupled to the feedback circuit 103 to receive the feedback signal, and wherein based on the feedback signal, the switching frequency control circuit 101 generates a switching frequency control signal; a current control circuit 102 configured to receive the current flowing through the primary winding and the peak current reference signal, and wherein based on the current flowing through the primary winding and the peak current reference signal, the current control circuit 102 generates a peak current control signal; and a logic circuit 105 coupled to the switching frequency control circuit and the current control circuit, wherein the logic circuit is configured to receive the switching frequency control signal and the peak current control signal, and wherein based on the switching frequency control signal and the peak current control signal, the logic circuit 105 provides the switching signal to toggle the main switch.

The embodiment in FIG. 2 is applied in an AC-DC converter. A rectifier bridge converts the AC input voltage $V_{IN}$ to a DC voltage $V_{DC}$; a transformer T, a main switch M, a diode $D_1$, and an output capacitor $C_o$ are coupled together to form a typical flyback converter, which a well-known circuit and is not described in more detail here for brevity. However, persons of ordinary skill in the art should realize that other embodiments may also be employed in DC-DC converters without detracting from the merits of the present invention if the input voltage is a DC voltage. In addition, the diode $D_1$ may be replaced by a synchronous rectifier, and the main switch M may comprise metal oxide semiconductor field effective transistor (MOSFET) or isolated gate bipolar transistor (IGBT), etc. The voltage across the capacitor $C_o$ is the output voltage $V_o$ of the switching mode power supply 100.

In the example of FIG. 2, there is no auxiliary winding, and the first input terminal of the feedback circuit 103 is coupled to the first terminal of the primary winding To to get the information of the input DC voltage $V_{DC}$. The second input terminal of the feedback circuit 103 is coupled to the second terminal of the transformer To to get the information of the input DC voltage $V_{DC}$ and the output voltage $V_o$. The feedback signal $S_{FB}$ is generated based on the signals in the 2 input terminals of the feedback circuit 103. According to the switching frequency control signal $f_{CTR}$ and the peak current limit signal $I_{CTR}$, the logic circuit 105 control the main switch M to regulate the output voltage $V_o$ of the switching mode power supply 100.

FIG. 3 shows a schematic circuit of a switching mode power supply 200 with primary side control in accordance with an embodiment of the present invention. The operations of the rectifier bridge and the flyback converter have been previously discussed with reference to FIG. 2. In the embodiment of FIG. 3, the switching mode power supply 200 includes: an integrated control circuit $IC_1$ which replaces the main switch M and several control circuits in switching mode power supply 100; an input resistor $R_{DC}$ having a first terminal and a second terminal, wherein the first terminal is coupled to the first terminal of the primary winding To to sense a voltage at the first terminal of the primary winding and the second terminal is coupled to the fourth pin (the input pin) Vs of the integrated control circuit $IC_1$; a feedback resistor $R_0$ having a first terminal and a second terminal, wherein the first terminal is coupled to the second terminal of the primary winding to sense a voltage at the second terminal of the primary winding and the second terminal is coupled to the $V_F$ pin of the integrated control circuit $IC_1$; a capacitor $C_1$ having a first terminal coupled to the first pin $V_{CC}$ of the integrated control circuit $IC_1$ and a second terminal connected to a primary reference ground. In the embodiment of FIG. 3, the current sense circuit 104 comprises a sample resistor $R_S$. As can be seen from the description below, the sample resistor $R_S$ is coupled in series with the main switch M which is integrated in the integrated control circuit $IC_1$. The sample resistor $R_S$ may be replaced by the conductance resistor of the main switch M.

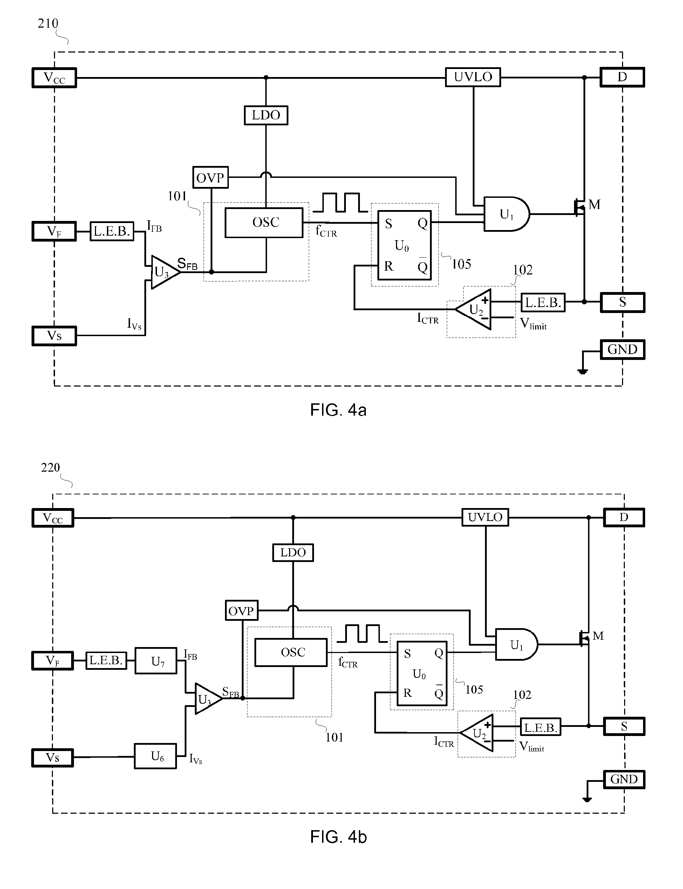

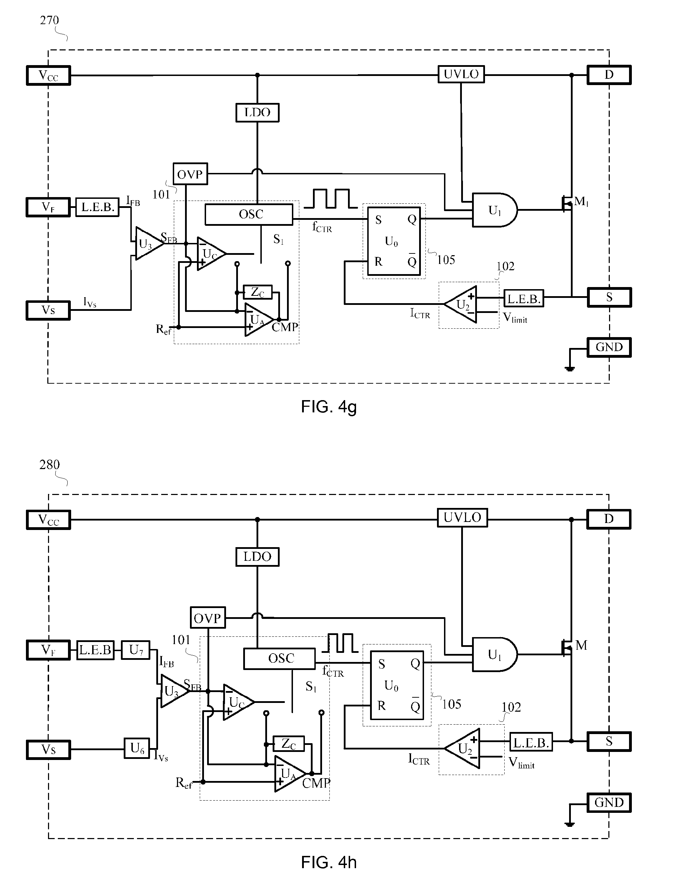

FIG. 4a schematically shows a circuit 210 represented by the integrated control circuit $IC_1$ of the switching mode power supply 200 of FIG. 3 in accordance with an embodiment of the present invention. Referring back to FIG. 3, the feedback circuit in this embodiment of the present invention comprises: an input resistor $R_{DC}$ having a first terminal and a second terminal, wherein the first terminal is coupled to the first terminal of the primary winding To to sense the voltage at the first terminal of the primary winding; a feedback resistor $R_0$ having a first terminal and a second terminal, wherein the first terminal is coupled to the second terminal of the primary winding To to sense the voltage at the second terminal of the primary winding $T_0$; and a subtracter $U_3$ having a first input terminal, a second input terminal and an output terminal, wherein the first input terminal is coupled to the second terminal of the input resistor $R_0$ to receive the voltage at the first terminal of the primary winding To, the second input terminal is coupled to the second terminal of the feedback resistor to receive the voltage at the second terminal of the primary winding To, and based on the voltage across the primary winding, the subtracter provides the feedback signal at its output terminal. Referring back to FIG. 4a, the subtracter $U_3$ subtracts the signal at the first input terminal and that at the second input terminal, and as will be discussed hereinafter, the output signal of the subtracter $U_3$ is indicative of the output signal. That is, the output signal of the subtracter $U_3$ is the feedback signal.. In this embodiment, the switching frequency control circuit comprises an oscillator (OSC), which is coupled to the feedback circuit to receive the feedback signal $S_{FB}$, and based on the feedback signal $S_{FB}$, the oscillator generates a switching frequency control signal. The current control circuit 102 comprises a comparator $U_2$. The integrated control circuit of FIG. 4a also comprises a LDO block which supplies power $V_{CC}$ to the components in the integrated control circuit, a UVLO block for under voltage lockout, and an OVP block for over voltage protection.

In an embodiment of the present invention, the circuit 210 includes two L.E.B. (Lead Edge Blanking) circuits. One L.E.B. circuit is coupled between the $V_F$ pin of the integrated control circuit $IC_1$ and the second input terminal of the substracter $U_3$, the other L.E.B circuit is coupled between the S pin of the integrated control circuit $IC_1$ and the inverting input terminal of comparator $U_2$. Both of the L.E.B circuits are used to eliminate wrong signals caused by the reverse-recovery process of the diode in the secondary side and by parasitic signal oscillations.

In an embodiment of the present invention, the logic circuit 105 is a RS flip-flop $U_0$. The RS flip-flop $U_0$ has a set terminal S, a reset terminal R, and an output terminal Q. When the switching mode power supply 200 is in the normal operation, at the beginning of each cycle, the oscillator outputs a high level signal to the set terminal S of the RS flip-flop $U_0$, resulting in a high level signal in the output terminal Q of the RS flip-flop $U_0$. During the normal operation, the output of the logic AND gate is determined by the output of the logic circuit. When the main switch M is turned on, the primary winding To starts to store energy. As the current flowing through the main switch M increases, the voltage across the sense resistor $R_s$ rises. When the voltage across the sense resistor $R_s$ reaches the reference voltage $V_{limit}$, the output of the peak current comparator $U_2$ goes high, the RS flip-flop $U_0$ is reset, and the main switch M is turned off. Then the energy stored in the primary winding $T_0$ is transferred to the secondary winding $T_1$. When the main switch M is turned off, the voltage across the feedback resistor $R_0$ is $V_{DC}+nxVo$, and the signal at the first input terminal of the subtracter $U_3$ is:

$$I_{FB} = \frac{V_{DC} + n \times V_O}{R_0}$$

wherein n is the turn ratio of the primary winding To to the secondary winding $T_1$; while the voltage across the input resistor $R_{DC}$ is $V_{DC}$, and the signal at the second input terminal of the subtracter $U_3$ is:

$$I_{VS} = \frac{V_{DC}}{R_{DC}} \ .$$

The feedback signal $S_{FB}$ in the output terminal of the subtracter $U_3$ is generated based on $I_{FB}$ and $I_{VS}$. If $R_0 = R_{DC}$, the output of subtracter $U_3$ is:

$$S_{FB} = I_{FB} - I_{VS} = \frac{(V_{DC} + n \times V_O)}{R_0} - \frac{V_{DC}}{R_{DC}} = \frac{n \times V_O}{R} \quad (1)$$

As can be seen from the above equation (1), the feedback signal $S_{FB}$ is in proportional to the output voltage $V_o$ of the switching mode power supply 200.

If $R_0$ is not equal to $R_{DC}$, impedance matching circuits $U_6$ and $U_7$ could be inserted into the circuit before the subtracter $U_3$. FIG. 4b shows a schematic circuit 220 represented by the integrated control circuit $IC_1$ in accordance with an embodiment of the present invention. Compared to the example of FIG. 4a, the impedance matching circuits $U_6$ and $U_7$ are added in circuit 220. The first impedance matching circuit $U_6$ has an input terminal and an output terminal, wherein the input terminal is coupled to the second terminal of the input resistor $R_{DC}$ to match the impedance of the input resistor, and the output terminal delivers the voltage at the first terminal of the primary winding $T_0$; the second impedance matching circuit $U_7$ has an input terminal and an output terminal, wherein the input terminal is coupled to the second terminal of the feedback resistor $R_0$ to match the impedance of the feedback resistor, and the output terminal delivers the voltage at the second terminal of the primary winding To.

Suppose $U_6$ has a coefficient k1 and $U_7$ has a coefficient k2, then:,

$$I_{VS} = \frac{k1 \times V_{DC}}{R_{DC}} , \quad I_{FB} = \frac{k2 \times (V_{DC} + n \times V_O)}{R_0}$$

Choose the coefficients k1 and k2, so that $k2/R0 = k1/R_{DC}$, then :

$$S_{FB} = I_{FB} - I_{VS} = \frac{k2 \times (V_{DC} + n \times V_O)}{R_0} - \frac{k1 \times V_{DC}}{R_{DC}} = \frac{k2 \times n \times V_O}{R_0} \quad (2)$$

It can be seen in equation (2) that the feedback signal $S_{FB}$ in circuit 220 is in proportional to $V_o$, too..

As mentioned hereinbefore, the switching mode power supply 200 operates under the constant current mode before the output voltage $V_o$ reaches the threshold voltage $V_{th}$. Constant current control with primary side control will be explained with reference to FIGs. 4a and 4b.

According to the law of conservation of energy, the energy of the primary side To and the energy of the secondary side T1 are equal. When the switching mode power supply 200 works under discontinuous conduction mode, the law of conservation of energy of the switching mode power supply 200 is illustrated as:

$$\frac{1}{2} L \times i_{peak}^{2} \times F_S \times \eta = V_O \times I_O$$

And when the switching mode power supply 200 operates under continuous conduction mode, the law of conservation of energy of the switching mode power supply 200 is illustrated as:

$$\frac{1}{2}L \times (i_{peak}^{2} - i_{initial}^{2}) \times F_S \times \eta = V_O \times I_O$$

wherein $F_s$ is the switching frequency of the switching mode power supply 200, $\eta$ is the conversion efficiency of the switching mode power supply 200, L is the inductance of the primary winding To, and $i_{peak}$ is the peak current value of the current flowing through the main switch M, $i_{initial}$ is the initial current value of the current flowing through main switch M when the main switch M is turned on. All of them are given in a particular system. So if Fs and Vo are varied in the same proportion, the output current Io is constant. As previously discussed, the feedback signal $S_{FB}$ is varied with the output voltage $V_o$, and the switching frequency control signal $f_{CTR}$ is varied with the feedback signal $S_{FB}$, so if the switching frequency control signal $f_{CTR}$ and the output voltage $V_o$ are varied in the same proportion, a constant output current $I_o$ may be obtained.

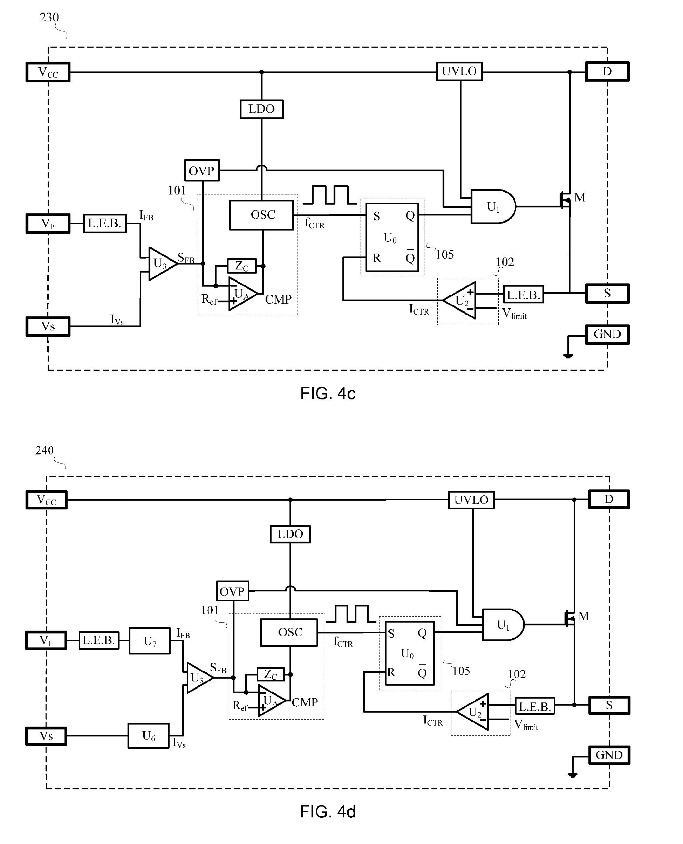

As previously discussed, the switching mode power supply 200 operates under the constant voltage mode when the output voltage reaches the threshold voltage $V_{th}$. FIG. 4c and FIG. 4d illustrate schematic circuits 230 and 240 which realize the constant voltage control with primary side feedback in accordance to yet another embodiment of present invention. Compared to the circuit 210, the circuit 230 in FIG. 4c further comprises: an error amplifier $U_A$ having a first input terminal, a second input terminal, and an output terminal, wherein the first input terminal is coupled to the feedback circuit 103 to receive the feedback signal $S_{FB}$, and the second input terminal is coupled to a reference signal Ref, and based on the feedback signal $S_{FB}$ and the reference signal Ref, the error amplifier $U_A$ outputs an amplified error signal at the output terminal; a compensating circuit Zc coupled between the first input terminal and the output terminal of the error amplifier $U_A$; and an oscillator coupled to the output terminal of the error amplifier $U_A$ to receive the amplified error signal CMP, and wherein based on the amplified error signal CMP, the oscillator provides the switching frequency control signal $f_{CTR}$.

During the operation of the switching mode power supply 200 with the integrated control circuit 230, the error amplifier $U_A$ clamps the feedback signal $S_{FB}$ to the reference voltage $R_{ef}$ which is indicative of the threshold voltage $V_{th}$, i.e., $S_{FB}=R_{ef}$, so the output voltage $V_o$ of the circuit 200 could be maintained at $V_{th}$. When there is a sudden increase in the output voltage, the feedback signal $S_{FB}$ also increases, then the output signal CMP of the error amplifier $U_A$ decreases, and the frequency $F_S$ controlled by the switching frequency control signal $f_{CTR}$ decreases correspondingly.

According to the law of conservation of energy:

$$\frac{1}{2}L \times i_{peak}^{2} \times F_S \times \eta = V_O \times I_O$$ (under discontinuous current mode), or

$$\frac{1}{2}L \times (i_{peak}^{2} - i_{initial}^{2}) \times F_S \times \eta = V_O \times I_O$$ (under continuous current mode),

the output voltage $V_o$ decreases accordingly (lo is nearly zero and could be seen as constant). Thus a negative feedback loop is formed. The output voltage $V_o$ is then clamped to the threshold voltage $V_{th}$. When the output voltage $V_o$ decreases suddenly, the switching mode power supply 200 with the integrated control circuit 230 has a similar response.

FIG. 4d shows a schematic circuit 240 of the integrated control circuit $IC_1$ in the switching mode power supply 200 in accordance with an embodiment of the present invention. Compared to the circuit 230, two impedance matching circuits $U_6$ and $U_7$ are added, the function of which are similar to that in FIG. 4b. The switching mode power supply 200 with the integrated control circuit 240 realizes the constant voltage control as that with the integrated control circuit 230 does, which is not described hereinafter for sake of brevity.

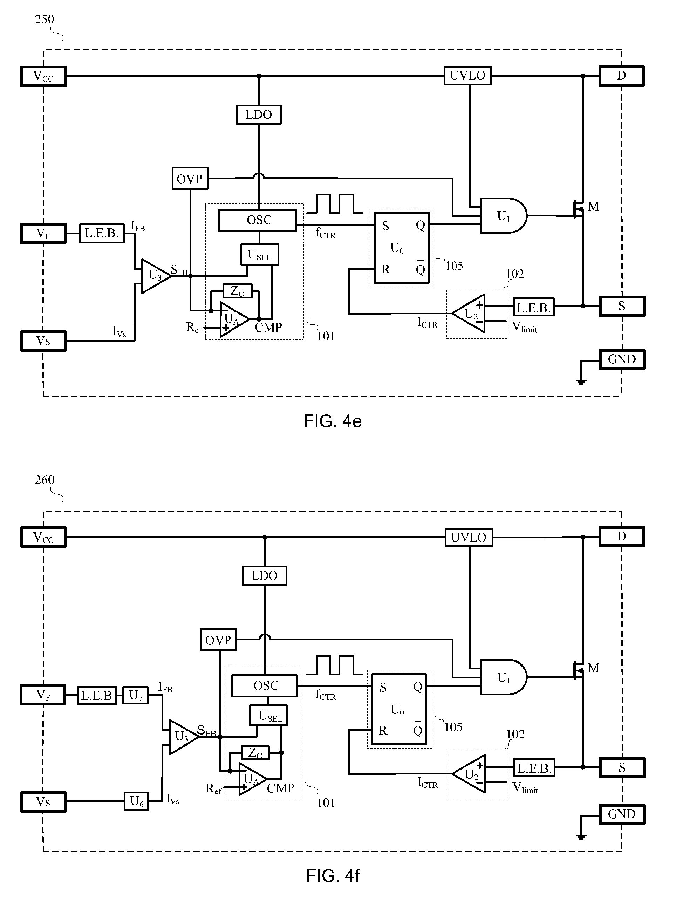

FIG. 4e schematically shows a circuit 250 represented by the integrated control circuit $IC_1$ of the switching mode power supply 200 in FIG. 3 in accordance with an embodiment of the present invention. In the example of FIG. 4e, the integrated control circuit 250 is a combination of the integrated control circuit 210 and the integrated control circuit 230. Compared to the integrated control circuit 230 of FIG. 4c, a selector $U_{SEL}$ is inserted into the switching frequency control circuit 101, which has a first input terminal, a second input terminal, and an output terminal, wherein the first input terminal is coupled to the feedback circuit 103 to receive the feedback signal $S_{FB}$, and the second input terminal is coupled to the output terminal of the error amplifier $U_A$ to receive the amplified error signal CMP, and wherein based on the feedback signal $S_{FB}$ and the amplified error signal CMP, an output signal is provided at the output terminal of the selector. In an embodiment of the present invention, the selector selects the lower value of the feedback signal $S_{FB}$ and the amplified error signal CMP as its output signal. The oscillator is coupled to the output terminal of the selector $U_{SEL}$, and based on the output signal of the selector $U_{SEL}$, the oscillator provides the switching frequency control signal $f_{CTR}$.

Before the output voltage of the switching mode power supply 200 reaches its threshold voltage $V_{th}$, the switching mode power supply 200 is supposed to operate under the constant current mode, and the feedback signal $S_{FB}$ which is proportional to the output voltage Vo is smaller than the output signal CMP of the error amplifier $U_A$, so the feedback signal $S_{FB}$ is selected by the selector $U_{SEL}$. The selector $U_{SEL}$ provides the feedback signal $S_{FB}$ to the oscillator and controls the frequency $F_S$ of the switching signal. In this condition, the integrated control circuit 250 operates as the integrated control circuit 210 does, and the switching mode power supply 200 operates under the constant current mode. The output signal CMP of the error amplifier $U_A$ decreases and the feedback signal $S_{FB}$ increases as the output voltage $V_o$ increases. When the output voltage $V_o$ of the switching mode power supply 200 reaches its threshold voltage $V_{th}$, the output signal CMP of error amplifier $U_A$ becomes smaller than the feedback signal $S_{FB}$, so the amplified error signal CMP is selected by the selector $U_{SEL}$. The selector $U_{SEL}$ provides the amplified error signal CMP to the oscillator, and controls the frequency $F_S$. In this condition, the integrated control circuit 250 operates as the integrated control circuit 230, and the switching mode power supply 200 operates under the constant voltage mode.

FIG. 4f shows a schematic circuit 260 represented by the integrated control $IC_1$ in the switching mode power supply 200 in according with an embodiment of the present invention. Compared to the integrated control circuit 250, the impedance matching circuits U6 and U7 are added, the function of which are similar to that in FIG. 4b. The switching mode power supply 200 with the integrated control circuit 260 realizes the constant current control and the constant voltage control as that with the integrated control circuit 250 does, which is not described hereinafter for brevity.

FIG. 4g shows a schematic circuit 270 represented by the integrated control circuit $IC_1$ in the switching mode power supply 200 in accordance with yet another embodiment of the present invention. Compared to the integrated control circuit 250 in FIG. 4e, a selectable circuit $S_1$ and a comparator $U_C$ are added instead of the selector $U_{SEL}$. The selectable circuit $S_1$ has a controllable terminal, a selectable terminal, and an output terminal, wherein the controllable terminal is coupled to the comparator $U_C$ to receive the comparison signal, the selectable terminal is controllably coupled to the feedback signal or to the amplified error signal, and wherein based on the comparison signal, the selectable circuit selects the feedback signal or the amplified error signal as an output signal provided by the output terminal. The comparator $U_C$ has a first input terminal and a second input terminal, wherein the first input terminal is coupled to the feedback circuit to receive the feedback signal $S_{FB}$, and the second input terminal is coupled to a reference signal $R_{ef}$, and based on the feedback signal $S_{FB}$ and the reference signal $R_{ef}$, the comparator $U_C$ generates a comparison signal. The selectable circuit $S_1$ may be a SPDT (single-pole double-throw) or a DPDT (double-pole double-throw). The oscillator is coupled to the output terminal of the selectable circuit, and based on the output signal provided by the output terminal of the selectable circuit, the oscillator provides the switching frequency control signal.

In an embodiment of the present invention, before the output voltage $V_o$ of the switching mode power supply 200 reaches its threshold voltage $V_{th}$, the switching mode power supply 200 is supposed to operate under the constant current mode, and the feedback signal $S_{FB}$ is lower than the reference voltage $R_{ef}$, so the comparator $U_C$ outputs a high level voltage, which controls the selectable circuit $S_1$ to couple the feedback signal $S_{FB}$ to the oscillator. In this condition, the integrated control circuit 270 operates as the integrated control circuit 210, and the switching mode power supply 200 operates under the constant current mode. When the output voltage $V_o$ of switching mode power supply 200 reaches its threshold voltage $V_{th}$, the feedback signal $S_{FB}$ is equal to the reference voltage $R_{ef}$, and the comparator $U_C$ outputs a low level voltage, so the output signal CMP of the error amplifier $U_A$ is coupled to the oscillator. In this condition, the integrated control circuit 270 operates as the integrated control circuit 230 does, and the switching mode power supply 200 operates under the constant voltage mode.

FIG. 4g shows a schematic circuit 280 of the integrated control circuit $IC_1$ in the switching mode power supply 200 in accordance with an embodiment of the present invention. Compared to the integrated control circuit 270, the impedance matching circuits $U_6$ and $U_7$ are added, the function of which are similar to that in FIG. 4b. The switching mode power supply 200 with the integrated control circuit 280 realizes the constant current control and the constant voltage control as that with the integrated control circuit 270 does.

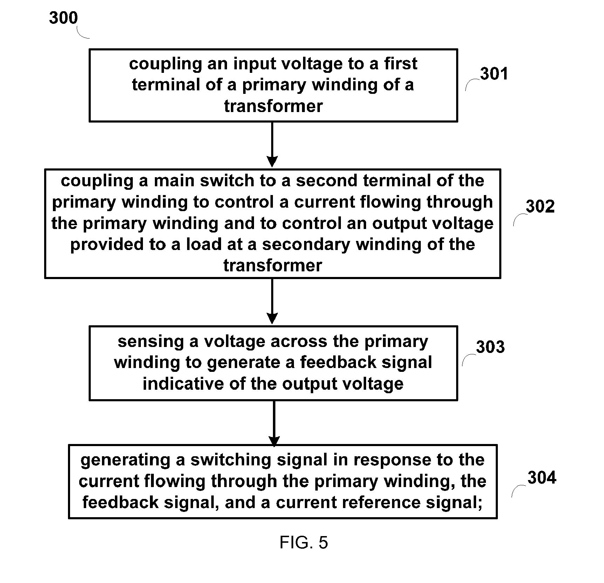

Furthermore, the present invention discloses a method of controlling a switching mode power supply. Referring to FIG. 5, a schematic flowchart 300 of the method is shown in accordance with en embodiment of the present invention. In the embodiment of FIG. 5, the method comprises: step 301, coupling an input voltage to a first terminal of a primary winding of a transformer; step 302, coupling a main switch to a second terminal of the primary winding to control a current flowing through the primary winding and to control an output voltage provided to a load at a secondary winding of the transformer; step 303, sensing a voltage across the primary winding to generate a feedback signal indicative of the output voltage; and step 304, generating a switching signal in response to: (1) the current flowing through the primary winding, (2) the feedback signal, and (3) a current reference signal; wherein the main switch is controlled by the switching signal; wherein the main switch is controlled by the switching signal

In one embodiment, the step 303 sensing the voltage across the primary winding to generate the feedback signal indicative of the output voltage comprises: coupling an input resistor to the first terminal of the primary winding to sense a voltage at the first terminal of the primary winding; coupling a feedback resistor to the second terminal of the primary winding to sense a voltage at the second terminal of the primary winding; and subtracting the voltage at the second terminal of the primary winding from the voltage at the first terminal of the primary winding.

In one embodiment, the step 304 generating a switching signal comprises: generating a switching frequency control signal in response to the feedback signal; generating a peak current control signal in response to the current flowing through the primary winding and the current reference signal; and generating the switching signal in response to the switching frequency control signal and the peak current control signal.

In one embodiment, generating a switching control frequency signal comprises: amplifying the difference between the feedback signal and a reference signal to generate an amplified error signal; and generating the switching frequency control signal in response to the amplified error signal. In one embodiment, generating a switching control frequency signal comprises: comparing the feedback signal with a reference signal to generate a comparison signal; amplifying the difference between the feedback signal and the reference signal to generate an amplified error signal; coupling the feedback signal or the amplified error signal to an oscillator in response to the comparison signal; and generating the switching frequency control signal from the oscillator.

An effective technique for getting the feedback signal from the primary side of the switching mode power supply has been disclosed. While specific embodiments of the present invention have been provided, it is to be understood that these embodiments are for illustration purposes and not limiting. Many additional embodiments will be apparent to persons of ordinary skill in the art reading this disclosure.

**Claims**

1. A switching mode power supply, comprising:

   a transformer having a primary winding and a secondary winding, wherein the primary winding has a first terminal and a second terminal, wherein the first terminal is configured to receive an input voltage, and the secondary winding is configured to supply power to a load;
   a main switch coupled to the second terminal of the primary winding to control a current flowing through the primary winding;
   a feedback circuit coupled to the primary winding to receive a voltage across the primary winding, and based on the voltage across the primary winding, the feedback circuit generates a feedback signal; and
   a control circuit having a first input terminal, a second input terminal, a third input terminal, and an output terminal, wherein the first input terminal is coupled to the feedback circuit to receive the feedback signal, the second input terminal is coupled to the main switch to receive the current flowing through the primary winding, and the third input terminal is coupled to a peak current reference signal, and wherein based on the feedback signal, the current flowing through the primary winding, and the peak current reference signal, the control circuit generates a switching signal to toggle the main switch.

2. The switching mode power supply of claim 1, further comprises:

   a current sense circuit coupled to the main switch, wherein the current sense circuit is configured to generate a current sensed signal by sensing the current flowing through the primary winding when the main switch is turned on.

3. The switching mode power supply of claim 1 wherein the control circuit comprises:

   a switching frequency control circuit coupled to the feedback circuit to receive the feedback signal, and wherein based on the feedback signal, the switching frequency control circuit generates a switching frequency control signal;
   a current control circuit configured to receive the current flowing through the primary winding and the peak current reference signal, and wherein based on the current flowing through the primary winding and the peak current reference signal, the current control circuit generates a peak current control signal; and
   a logic circuit coupled to the switching frequency control circuit and the current control circuit, wherein the logic circuit is configured to receive the switching frequency control signal and the peak current control signal, and wherein based on the switching frequency control signal and the peak current control signal, the logic circuit provides the switching signal to toggle the main switch.

4. The switching mode power supply of claim 3, wherein the feedback circuit comprises:

an input resistor having a first terminal and a second terminal, wherein the first terminal is coupled to the first terminal of the primary winding to sense a voltage at the first terminal of the primary winding;
a feedback resistor having a first terminal and a second terminal, wherein the first terminal is coupled to the second terminal of the primary winding to sense a voltage at the second terminal of the primary winding; and
a subtracter having a first input terminal, a second input terminal and an output terminal, wherein the first input terminal is coupled to the second terminal of the input resistor to receive the voltage at the first terminal of the primary winding, the second input terminal is coupled to the second terminal of the feedback resistor to receive the voltage at the second terminal of the primary winding, and wherein based on the voltage across the primary winding, the subtracter provides the feedback signal at its output terminal.

5. The switching mode power supply of claim 3, wherein the feedback circuit comprises:

an input resistor having a first terminal and a second terminal, wherein the first terminal is coupled to the first terminal of the primary winding to sense a voltage at the first terminal of the primary winding;
a feedback resistor having a first terminal and a second terminal, wherein the first terminal is coupled to the second terminal of the primary winding to sense a voltage at the second terminal of the primary winding;
a first impedance matching circuit having an input terminal and an output terminal, wherein the input terminal is coupled to the second terminal of the input resistor to match the impedance of the input resistor, and the output terminal delivers the voltage at the first terminal of the primary winding;
a second impedance matching circuit having an input terminal and an output terminal, wherein the input terminal is coupled to the second terminal of the feedback resistor to match the impedance of the feedback resistor, and the output terminal delivers the voltage at the second terminal of the primary winding; and
a subtracter having a first input terminal, a second input terminal and an output terminal, wherein the first input terminal is coupled to the output terminal of the first impedance matching circuit to receive the voltage at the first terminal of the primary winding, the second input terminal is coupled to the output terminal of the second impedance matching circuit to receive the voltage at the second terminal of the primary winding, and wherein based on the voltage across the primary winding, the subtracter provides the feedback signal at its output terminal.

6. The switching mode power supply of claim 3, wherein the switching frequency control circuit comprises an oscillator coupled to the feedback circuit to receive the feedback signal, and wherein based on the feedback signal, the oscillator generates the switching frequency control signal.

7. The switching mode power supply of claim 4, wherein the switching frequency control circuit comprises:

an error amplifier having a first input terminal, a second input terminal, and an output terminal, wherein the first input terminal is coupled to the feedback circuit to receive the feedback signal, and the second input terminal is coupled to a reference signal, and wherein based on the feedback signal and the reference signal, the error amplifier outputs an amplified error signal at the output terminal;
a compensation circuit coupled between the first input terminal and the output terminal of the error amplifier; and
an oscillator coupled to the output terminal of the error amplifier to receive the amplified error signal, and wherein based on the amplified error signal, the oscillator provides the switching frequency control signal.

8. The switching mode power supply of claim 5, wherein the switching frequency control circuit comprises:

an error amplifier having a first input terminal, a second input terminal, and an output terminal, wherein the first input terminal is coupled to the feedback circuit to receive the feedback signal, and the second input terminal is coupled to a reference signal, and wherein based on the feedback signal and the reference signal, the error amplifier outputs an amplified error signal at the output terminal;
a compensation circuit coupled between the first input terminal and the output terminal of the error amplifier; and
an oscillator coupled to the output terminal of the error amplifier to receive the amplified error signal, and wherein based on the amplified error signal, the oscillator provides the switching frequency control signal.

9. The switching mode power supply of claim 4, wherein the switching frequency control circuit comprises:

an error amplifier having a first input terminal, a second input terminal, and an output terminal, wherein the first input terminal is coupled to the feedback circuit to receive the feedback signal, and the second input terminal is coupled to a reference signal, and wherein based on the feedback signal and the reference signal, the error amplifier outputs an amplified error signal at the output terminal;

a compensation circuit coupled between the first input terminal and the output terminal of the error amplifier;

a selector having a first input terminal, a second input terminal, and an output terminal, wherein the first input terminal is coupled to the feedback circuit to receive the feedback signal, and the second input terminal is coupled to the output terminal of the error amplifier to receive the amplified error signal, and wherein based on the feedback signal and the amplified error signal, an output signal is provided at the output terminal of the selector; and

an oscillator coupled to the output terminal of the selector, and wherein based on the output signal provided by the output terminal of the selector, the oscillator provides the switching frequency control signal.

10. The switching mode power supply of claim 5, wherein the switching frequency control circuit comprises:

an error amplifier having a first input terminal, a second input terminal, and an output terminal, wherein the first input terminal is coupled to the feedback circuit to receive the feedback signal, and the second input terminal is coupled to a reference signal, and wherein based on the feedback signal and the reference signal, the error amplifier outputs an amplified error signal at its output terminal;

a compensation circuit coupled between the first input terminal and the output terminal of the error amplifier;

a selector having a first input terminal, a second input terminal, and an output terminal, wherein the first input terminal is coupled to the feedback circuit to receive the feedback signal, and the second input terminal is coupled to the output terminal of the error amplifier to receive the amplified error signal, and wherein based on the feedback signal and the error amplified signal, an output signal is provided at the output terminal of the selector; and

an oscillator coupled to the output terminal of the selector, and wherein based on the output signal of the selector, the oscillator provides the switching frequency control signal.

11. A method of controlling a switching mode power supply, comprising:

coupling an input voltage to a first terminal of a primary winding of a transformer;

coupling a main switch to a second terminal of the primary winding to control a current flowing through the primary winding and to control an output voltage provided to a load at a secondary winding of the transformer;

sensing a voltage across the primary winding to generate a feedback signal indicative of the output voltage; and

generating a switching signal in response to: (1) the current flowing through the primary winding, (2) the feedback signal, and (3) a current reference signal; wherein the main switch is controlled by the switching signal.

12. The method of claim 11, wherein the step of sensing the voltage across the primary winding to generate the feedback signal indicative of the output voltage comprises:

coupling an input resistor to the first terminal of the primary winding to sense a voltage at the first terminal of the primary winding;

coupling a feedback resistor to the second terminal of the primary winding to sense a voltage at the second terminal of the primary winding; and

subtracting the voltage at the second terminal of the primary winding from the voltage at the first terminal of the primary winding.

13. The method of claim 11, wherein generating a switching signal comprises:

generating a switching frequency control signal in response to the feedback signal;

generating a peak current control signal in response to the current flowing through the primary winding and the current reference signal; and

generating the switching signal in response to the switching frequency control signal and the peak current control signal.

14. The method of claim 13, wherein generating a switching frequency control signal in response to the feedback signal comprises:

amplifying the difference between the feedback signal and a reference signal to generate an amplified error signal; and
generating the switching frequency control signal in response to the amplified error signal.

15. The method of claim 13, wherein generating a switching control frequency signal in response to the feedback signal comprises:

comparing the feedback signal with a reference signal to generate a comparison signal;
amplifying the difference between the feedback signal and the reference signal to generate an amplified error signal;
coupling the feedback signal or the amplified error signal to an oscillator in response to the comparison signal; and
generating the switching frequency control signal from the oscillator.

FIG. 1a

FIG. 1b

(Prior Art)

FIG. 2

FIG. 3

FIG. 4a

FIG. 4b

FIG. 4c

FIG. 4d

FIG. 4e

FIG. 4f

FIG. 4g

FIG. 4h

**300**

| coupling an input voltage to a first terminal of a primary winding of a transformer | 301 |

↓

| coupling a main switch to a second terminal of the primary winding to control a current flowing through the primary winding and to control an output voltage provided to a load at a secondary winding of the transformer | 302 |

↓

| sensing a voltage across the primary winding to generate a feedback signal indicative of the output voltage | 303 |

↓

| generating a switching signal in response to the current flowing through the primary winding, the feedback signal, and a current reference signal; | 304 |

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201010124806